# EUROPEAN PATENT APPLICATION

(11) **EP 1 628 204 A1**
(43) Date of publication of application: **22.02.2006**
(21) Application number: 04728398.1
(22) Date of filing: 20.04.2004
(51) Int. Cl.: G06F 3/12

(54) **PRINTING DEVICE AND PRINTING INSTRUCTION DEVICE**

(30) Priority: 08.05.2003 JP 2003130464
(71) Applicant: MATSUSHITA ELECTRIC INDUSTRIAL CO., LTD., Kadoma-shi, Osaka 571-8501 (JP)
(72) Inventor: MATSUNAGA, Shigeki, Osaka-shi, Osaka 532-0022 (JP)
(74) Representative: Pautex Schneider, Nicole Véronique
(86) International application number: PCT/JP2004/005595
(87) International publication number: WO 2004/099968

(57) **Abstract**

In a printer (3), a communication unit (302) receives location information indicating a storage location of a job ticket describing details of a printing instruction, and a print processing unit (304) receives a printing instruction for print data by this. When processing of a print job which has been queued is completed, the print processing unit (304) requests transmission of the job ticket according to the received location information. When the communication unit (302) receives the requested job ticket, transmission of the print data is requested according to the received job ticket. When the communication unit (302) receives the requested print data, the print processing unit (304) causes a printer engine (306) to print the received print data according to the details of the job ticket.

## Description

### Technical Field

The present invention relates to a pull-type printing device having a function of pulling print data stored in a print data supply device by requesting and obtaining such print data.

### Background Art

Conventionally, according to laser printers that handle print data described in a format such as Printer Control Language (PCL) and Post Script (PS), print setting parameters for a print job are set only when a printing instruction to print the print data is provided, and such print setting parameters that have been set are described directly on the print data. Accordingly, the print setting parameters and print data are transmitted together to a printer, where printing of the print data is performed.

Meanwhile, according to protocols such as Printer Subunit in IEEE1394 and Printer Profile in Universal Plug and Play (UPnP), print job information that accompanies print setting parameters is transmitted, and then print data is transmitted to a printer, which then performs printing of the print data (see Japanese Laid-Open Patent application No. 2002-29100 publication).

In recent years, there is a wide range of setting parameters for a print job, such as parameters for color switching and N-column specification. Along with this trend, it is expected that a need becomes apparent for being able to make a change in parameters that have been set for a job, even when a user has already given a printing instruction and thus such job is in the queue.

In order to respond to such need, the conventional technologies require a print request to be cancelled once and PCL data to be transmitted again, as well as requiring a command for changing print setting parameters for the print job to be issued to a printer, every time the user gives a setting change instruction. This causes a problem that the number of transactions between the printing instruction device and the printer increases.

The present invention has been conceived in view of the above problem, and it is an object of the present invention to provide a printing device and a printing instruction device that are capable of allowing a change of print setting parameters to be made at an arbitrary timing until print processing starts, requiring a minimum number of transactions to be carried out between the printing instruction device and the printer.

### Disclosure of Invention

In order to achieve the above object, the printing device according to the present invention is a printing device that pulls print data to be printed by requesting and obtaining the print data, the device including: a print start instruction receiving unit that receives location information indicating a storage location of printing instruction information indicating details of a printing instruction to the printing device, the location information being received as an instruction indicating that printing of the print data should be started; a printing instruction information request unit that requests transmission of the printing instruction information indicated by the location information received by the print start instruction receiving unit; a printing instruction information receiving unit that receives the printing instruction information requested by the printing instruction information request unit; a print data request unit that requests transmission of the print data, based on the printing instruction information; a print data receiving unit that receives the print data requested by the print data request unit; and a printing unit that prints the received print data according to the received printing instruction information. With the above construction, since the print start instruction receiving unit receives, as an instruction indicating that the printing of the print data should be started, the location information indicating the storage location of the printing instruction information, it becomes possible for the printing device of the present invention to queue only the location information of the printing instruction information as a job in a wait state. This makes it possible to save memory resources required to queue information related to a job in a wait state in the printing device. Furthermore, since the printing instruction information itself is not queued in the printing device as a job in a wait state, it becomes possible for the sender of the printing instruction information to locally hold the printing instruction information. Accordingly, it becomes possible for the sender of the printing instruction information to freely update the printing instruction information until the printing instruction information is transmitted to the printing device.

Furthermore, in the printing device of the present invention, the printing instruction information may include location information indicating a storage location of the print data, and the print data request unit may request the transmission of the print data based on the location information included in the printing instruction information. Accordingly, since it becomes possible for the sender of the printing instruction information to freely update the printing instruction information until the printing instruction information is transmitted to the printing device, it becomes possible to freely update the print type specification information included in the printing instruction information without having to perform a transaction with the printing device.

Moreover, the printing instruction device according to the present invention is a printing instruction device that gives, to a printing device, a printing instruction to print print data, the device including: a printing instruction input unit that accepts an instruction, inputted from a user, indicating that the print data should be printed; a printing instruction information generation unit that generates printing instruction information when the instruction indicating that the print data should be printed is accepted, the printing instruction information indicating details of the printing instruction to the printing device; a printing instruction information storage unit that holds the generated printing instruction information; a location information generation unit that generates location information indicating a storage location of the printing instruction information; a location information transmission unit that transmits the generated location information to the printing device; a transmission request receiving unit that receives, from the printing device, a request for transmission of the printing instruction information indicated by the location information; and a printing instruction information transmission unit that transmits the stored printing instruction information to the printing device, in response to the request for transmission. With the above construction, the printing instruction information is locally stored in the printing instruction information storage unit until being transmitted to the printing device in response to the request for transmission. Accordingly, it becomes possible for the printing instruction information generation unit to whenever update the details of the printing instruction information until the printing instruction information is transmitted to the printing device, without having to perform a transaction with the printing device, under the condition that the location information of the printing instruction device is not to be changed.

Furthermore, in the printing instruction device of the present invention, the printing instruction input unit may include a print type specification input unit that accepts an specification, inputted from the user, indicating a print type of the print data, the printing instruction information generation unit may include a print type specification information generation unit that generates print type specification information for specifying the print type, when the specification indicating the print type is accepted, and the printing instruction information generation unit may generate the printing instruction information that includes the generated print type specification information, when the instruction indicating that the print data should be printed is accepted. In the above printing instruction device, it is possible for the printing instruction generation unit to whenever update the details of the printing instruction information until the printing instruction information is transmitted to the printing device, without having to perform a transaction with the printing device. Accordingly, it is also possible to freely update the print type specification information which is an item in the printing instruction information until the printing instruction information is transmitted to the printing device, without any transactions with the printing device.

As described above, according to the printing device and printing instruction device of the present invention, since only local data in the printing instruction device is required to be rewritten to make a change in the setting of the print parameters, it is possible to produce the effect that no extra transaction is required to be performed between the printing instruction device and the printer in order to make a change in the print parameters.

Furthermore, since job queuing information in the printing device is only the location information of a job ticket, it is possible to produce the effect of being able to save memory resources required for job queuing.

Note that not only is it possible to embody the present invention as a printing instruction device, a printing device, and a print data supply device as described above, but also as a content print system formed of these devices, as a content print method that includes, as its steps, the characteristic units included in each of the devices, and as programs that cause a computer to execute these steps. It should be also noted that such programs and print contents can be distributed over a communication network such as the Internet and on a computer-readable recording medium such as CD-ROM.

### Brief Description of Drawings

FIG. 1 is a block diagram showing a schematic structure of a content print system according to an embodiment of the present invention.
FIG. 2 is a block diagram showing a more detailed construction of each device in the content print system shown in FIG. 1.
FIG. 3 is a diagram showing an example of a print setting screen to be displayed on a television monitor when print settings are performed for print data.
FIG. 4 is a flowchart showing an operation performed by an STB in the content print system according to the present invention.
FIG. 5 is a diagram showing a video content that includes print content related thereto as well as a corresponding operation performed by the user to input a printing instruction
FIG. 6 is a diagram showing a flow of data at the time of print processing in the content print system shown in FIG. 1.
FIG. 7 is a flowchart showing an operation performed by a printer in the content print system according to the present invention.
FIG. 8(a), (b), (c), and (d) is a diagram showing an example of how a display screen of the television monitor shifts during the period from when a printing instruction is inputted from a screen showing a content until when the printing of the screen actually starts.
FIG. 9(a), (b), (c), and (d) is a diagram showing another example of how a display screen of the television monitor shifts during the period from when a printing instruction is inputted from a screen showing a content until when the printing of the screen actually starts.
FIGS. 10A, 10B, and 10C are diagrams showing an example of a printing instruction input screen in the case where a printing instruction device is a digital television (DTV), a mobile phone, and a personal digital assistant (PDA), respectively.
FIGS. 11A, 11B, and 11C are diagrams showing an example of an output to be presented in the case where a presentation device is an audio component stereo, a DTV, and a printing device, respectively.

### Best Mode for Carrying Out the Invention

The following describes the embodiment of the present invention with reference to the drawings.

### (First Embodiment)

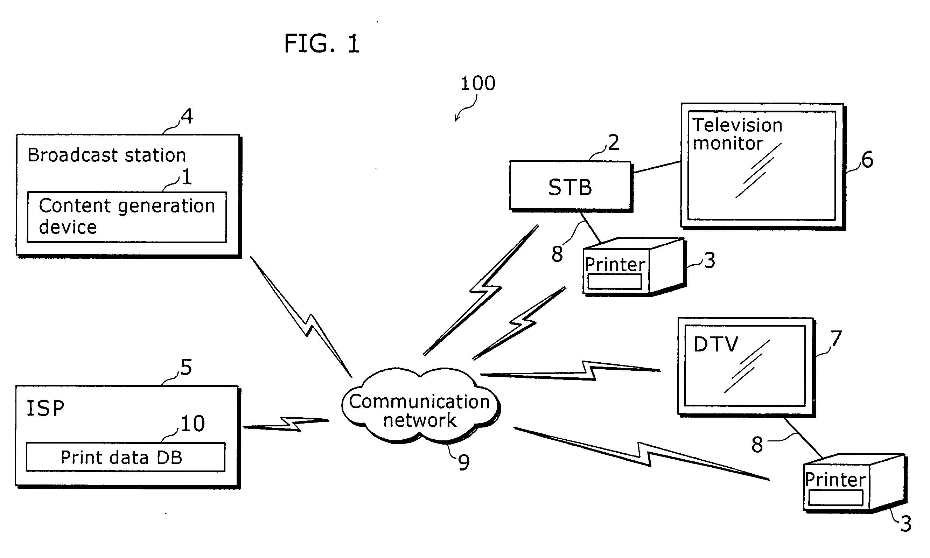

FIG. 1 is a block diagram showing a schematic structure of a content print system 100 according to the present embodiment. The content print system 100 is a system in which a printer 3 separately obtains (pulls) ( i ) a job ticket that describes print job-related information including print settings for print data and ( ii ) print data that represents a document, an image, and the like to be printed, and prints the print data according to the obtained job ticket. Such content print system 100 is comprised of a set-top box (STB) 2 being a printing instruction device, printer(s) 3, a broadcast station 4, an Internet service provider (ISP) 5 being a print data supply device, a television monitor 6, a DTV 7, an external bus 8, a communication network 9, and the like. The STB 2 and a printer 3, and the DTV 7 and a printer 3 are respectively connected by the external bus 8 such as IEEE1394, for example. The broadcast station 4 is internally equipped with a content generation device 1. The ISP 5 is internally equipped with a print data data base (DB) 10.

The broadcast station 4 distributes, to the television monitor 6, the DTV 7, or the like of each home, a various kinds of contents such as video content and print content via television broadcasting such as terrestrial television broadcasting, broadcasting satellite (BS) and communication satellite (CS), or via web pages on the Internet. Of such various contents, a print content itself for printing is not transmitted and only location information is transmitted that indicates a storage location of such print content. The content generation device 1 generates various contents to be distributed to homes from the broadcast station 4.

The STB 2 is a communication terminal that has a function of receiving a video content from the broadcast station 4 and causing the television monitor 6 connected to the STB 2 to display the received video content. As for a print content, the STB 2 receives, from the broadcast station 4, location information indicating a storage location of the print content, and causes the printer 3 connected to the STB 2 to print such print content. More specifically, when receiving a printing instruction to print a print content from the user, the STB 2 sends, to the printer 3, location information indicating a storage location of the job ticket. When the printer 3 thereafter makes a request for a job ticket, the STB 2 sends a required job ticket to the printer 3.

In this specification, a job ticket is data made up of: print parameters indicating the print settings for print data (e.g. print layout such as 2 in 1 print layout, paper size, print direction, font type, print quality, paper supply method, and the like); and location information that indicates a storage location of the print data being the print content itself. In the job ticket, the location information of the print content is described as, for example, a uniform resource identifier (URI). The storage location of the print data may be either the print data DB 101 inside the content generation device 1 of the broadcast station 4 or the print data DB 10 of the ISP 5, for example. Moreover, an address of the hard disk in the STB 2 as well as a hard disk device that is connected to the STB 2 via the external bus 8 may also serve as the storage location. In such case, a transmission source from which the location information of a print content is received is not limited to the broadcast station, and the STB 2 may identify the storage location of the print content by itself so as to generate the location information or may generate the location information based on a specification from the user of the print content.

The printer 3 is a pull-type printer which, when receiving the location information from the STB 2 indicating the storage location of the job ticket, pulls the job ticket indicated by the received location information, and pulls the print data to be printed according to the location information described in the job ticket. For the printer 3, location information indicating the storage location of a job ticket is equivalent to a print command for printing the print data indicated by such job ticket. In the case where there is a print job in progress (i.e. a print job in the queue is present in the printer 3) when receiving the location information indicating the storage location of the job ticket, the printer 3 continues the print processing until such job is completed. At the completion of such job, that is, at the stage in which a new print job is ready to be executed, the printer 3 pulls the job ticket. Furthermore, the printer 3 prints the print data according to the print parameters indicated by such pulled job ticket.

The ISP 5 is a server that ( i ) assigns an IP address to the STB connected to the Internet, the printer 3, a PC, and the like not illustrated in the drawing, ( ii ) distributes to them print data stored in the print data DB 10, and ( iii ) provides them with a service on the Internet. The print data DB 10, which is implemented by a hard disk or the like, previously holds print data distributed from the ISP 5 over a communication network 9.

The television monitor 6 displays a video content inputted from the STB 2. The DTV 7 is a digital television that contains the function of the STB 2. The external bus 8 is a data transmission path such as an IEEE1394 bus and an SCSI bus. The communication network 9 is a data transmission path that includes television broadcasting, mobile telephone line network, the Internet, and the like.

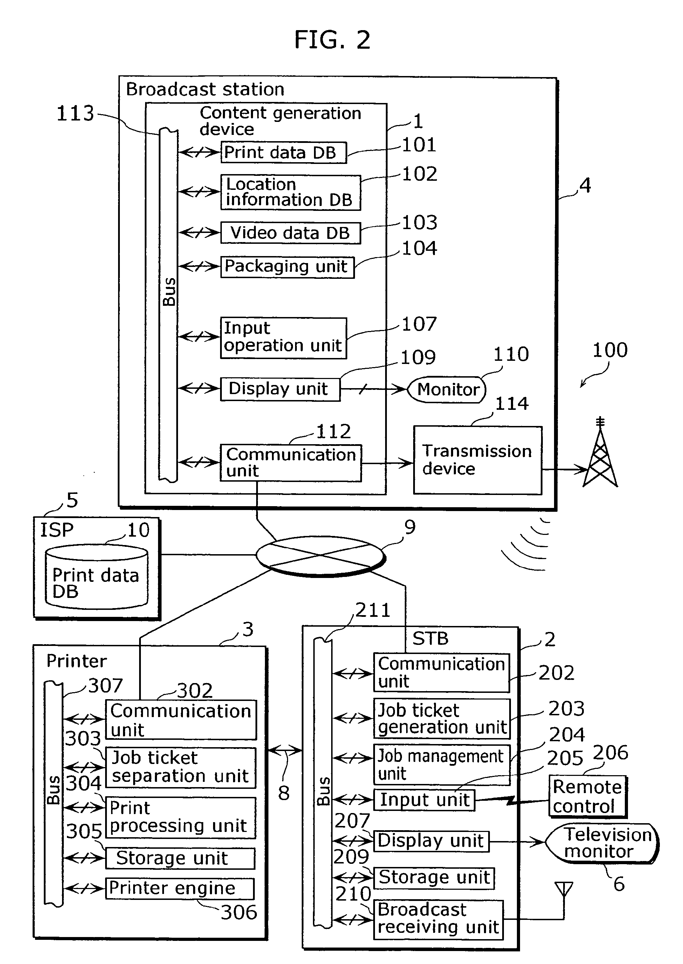

FIG. 2 is a block diagram showing a more detailed construction of each device in the content print system 100 shown in FIG. 1. In FIG. 2, the components that have been described above are assigned the same reference numbers, and descriptions thereof are not given below.

The broadcast station 4 is equipped with a content generation device 1, a monitor 110, and a transmission device 114. The components that make up the content generation device 1 are roughly categorized as the following: three DBs that are implemented by hard disks (a print data DB 101, a location information DB 102, and a video data DB 103); four processing units that are implemented by CPUs (a packaging unit 104, an input operation unit 107, a display unit 109, and a communication unit 112); and a bus 113.

The print data DB 101 holds, as text files, print data such as previously generated character information and broadcast mails included in respective contents. Furthermore, the print data DB 101 holds, as image files, print data that represents posters and the like of images related to respective video contents to be distributed. The location information DB 102 holds the location information of each print data stored in the print data DB 101 or in the print data DB 10 of the ISP 5 located outside. The video data DB 103 holds previously generated video data.

The packaging unit 104 outputs a video content and the location information of the print content related to such video content to the communication unit 112 in packaged form. The input operation unit 107 receives inputs from a remote control, a keyboard, or the like not illustrated in the drawing. The display unit 109 generates display image data such as menu screen that is used by an operator making an input to the input operation unit 107 through an operation of a remote control, a keyboard, or the like not illustrated in the drawing. The monitor 110, which is a CRT display, a liquid crystal display panel, or the like connected to the content generation device 1, displays thereon display image data inputted from the display unit 109.

The communication unit 112, which is equipped with a local area network (hereinafter referred to as LAN) interface to make a connection to a wide area network (hereinafter referred to as WAN) and to a LAN, has a function of communicating with an external device of the content generation device 1. Upon receipt of a request for print data from the printer 3, the communication unit 112 sends, to the printer 3, the requested print data stored in the print data DB 101. Furthermore, the communication unit 112 transfers, to the transmission device 114, a content for broadcasting that has been packaged by the packaging unit 104. The bus 113 is a parallel data transmission path that is used by the components in the content generation device 1 to exchange data with each other. The transmission device 114 transmits, on television broadcast air waves, the content for broadcasting, made up of the location information of print data and video data, that has been packaged by the packaging unit 104.

The STB 2 is externally connected to a remote control 206 and the television monitor 6. The components that make up the STB 2 are roughly categorized as: a storage unit 209 that is implemented by an IC card, a RAM, a hard disk, or the like; and six processing units that are implemented by CPUs or the like (a communication unit 202, a job ticket generation unit 203, a job management unit 204, an input unit 205, a display unit 207, and a broadcast receiving unit 210).

The communication unit 202 is equipped with a parallel I/F, a universal serial bus (USB), an IEEE1394 bus interface, or the like that allows a connection between the STB 2 and the printer 3, and has a function of sending and receiving data between the STB 2 and an external device such as a printer 3.

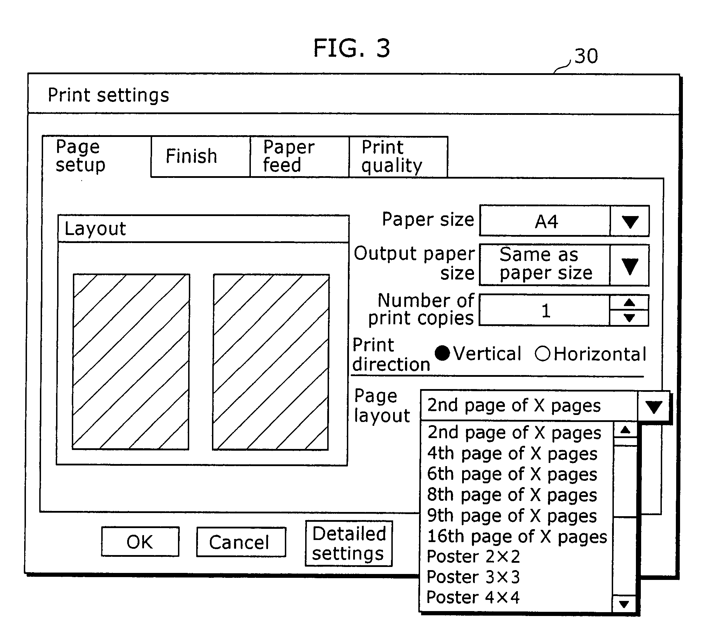

The job ticket generation unit 203 obtains, from the received content, the location information of the print data to be printed, according to a printing instruction that has been inputted by the user by operating the remote control 206. Furthermore, the job ticket generation unit 203 causes the display unit 207 to generate display image data for a print setting screen that prompts for an input related to print settings for the print data, and accepts an input related to print settings inputted to the input unit 205. FIG. 3 is a diagram showing an example of a print setting screen to be displayed on the television monitor 6 when print settings are performed for the print data. As shown in the drawing, a print setting screen 30 includes pull-down windows for selecting and inputting the settings that include: page layout such as 2 in 1 and 4 in 1 print layout; paper size such as post card size, A4, and B5; the number of print copies; print direction; and scale up/scale down.

While not illustrated in the drawing, the job ticket generation unit 203 further accepts an input related to print settings such as image quality, bordered/borderless print, paper quality, black-and-white/color, header/footer setting, and single- or double-sided print. Image quality settings include: "high image quality" for printing high-resolution images; "normal" for printing images with standard image quality; "speed priority" for giving a higher priority to print speed than image quality by speeding up the paper feed; and "black-and-white high speed" for increasing the speed of black-and-white print by changing a less frequently used color ink nozzle to a black ink nozzle. Bordered/borderless print setting allows for the selection and setting of either "bordered print" for printing an image with border or "borderless print" for printing an image without border. Paper quality setting allows for the selection of the quality of print paper and the selection of printing that is optimum for the selected paper quality. For example, it is possible to select one of photo paper, inkjet paper, film, iron print, over head projector (OHP), and postal card, and to select an optimum printing for the quality of the selected paper (e.g. adjustment of paper feed speed). Black-and-white/color setting allows for the selection of either "black-and-white" print or "color" print. Header/footer settings include the setting of a function for reading the date recorded in the header of an image file (e.g. JPEG file) shot by a digital camera and for printing the read-out date onto the margin of a print paper, using a font available in the printer. In addition, header/footer settings also include the setting for printing, onto the margin of a print paper, print date, the title of a document to be printed, page numbers, and the like. In the case of laser printers, single- or double-sided print setting allows for the selection of whether to print images on one side or both sides of a print paper.

The user operates the remote control 206, looking at the above-described print setting screen 30 displayed on the television monitor 6, so as to input print settings to the input unit 122. The job ticket generation unit 203 generates print parameters indicating the respective items of the inputted print settings. Then, the job ticket generation unit 203 generates a job ticket that is made up of the generated print parameters and the location information indicating the storage location of the print data obtained from the content. Note that the location information of the print data is not limited to be obtained from the content, and therefore it is also possible that the STB 2 searches for pieces of print data and their location information and then prompts the user to make a selection from among them. More specifically, it is also possible to obtain the location information of print data by employing the following structure: the STB 2 is newly equipped with a print data search unit that searches the STB 2 and an external device for print data so as to obtain location information, and the STB 2 causes the display unit 207 to generate display image data used for a print data selection screen for selecting print data, based on the search result of the print data search unit, so as to prompt the user to select, via the input unit 205, one of the pieces of searched print data. Other methods include a method in which the user is prompted to input the location information of print data directly so that the print data can be obtained. To be more specific, the STB 2 may cause the display unit 207 to generate display image data used for a print data location information input screen that accepts an input of the location information of print data and then prompt the user to input the location information of the print data via the input unit 205.

The job management unit 204, which is a processing unit that manages print jobs in the printer 3, generates location information of a job ticket that has been generated by the job ticket generation unit 203 and that is stored in the storage unit 209, and sends the generated location information to the printer 3. Furthermore, when the communication unit 202 receives a request for job ticket from the printer 3, the job management unit 204 reads the requested job ticket from the storage unit 209, and sends it to the printer 3. During these processes, that is, during the period from when the job management unit 204 sends the location information of the job ticket to the printer 3 until when the printer 3 requests the transmission of the job ticket, the job management unit 204 accepts an input from the user for making a change in the print settings. Note that it is also possible to employ an implementation style, thereby not allowing the reading of a requested job ticket to be performed until the completion of rewriting print parameters included in the job ticket, while the job management unit 204 is accepting a user input for making a change in the print settings, even when the communication unit 202 has received a request for the transmission of the job ticket from the printer 3. In this case, the job management unit 204 reads the requested job ticket from the storage unit 209 and sends it to the printer 3 via the communication unit 202 for the first time when the rewriting of the print parameters included in the job ticket is completed. Also in the above case, it is also possible to send, to the printer 3 which is making a request for a job ticket, a command for making such printer 3 to wait for the transmission of the job ticket, so as to keep the printer waiting. The input unit 205 accepts an input such as a printing instruction that is given by the user by operating the remote control 206, in response to an input screen that gives guidance to the user about an input and the like of printing instruction for printing print data. The remote control 206, which is an external device of the STB 2, transmits the details of an input made by a user operation to the input unit 205 by infrared rays. The display unit 207 generates a video content that should be displayed on the television monitor 6 as well as display image data for a menu screen, a print setting screen, or the like used by the user to perform input operations. The storage unit 209 holds contents received from the broadcast station 4 or the like as well as job tickets generated by the job ticket generation unit 203. The broadcast receiving unit 210 receives contents for broadcasting from the broadcast station 4. The bus 211 is a parallel transmission path that is used by the components in the STB 2.

The printer 3 is comprised of a communication unit 302, a job ticket separation unit 303, a print processing unit 304, a storage unit 305, a printer engine 306, and a bus 307.

The communication unit 302, which is equipped with a parallel I/F, a USB, an IEEE1394 bus interface, or the like, has a function of communicating with an external device such as the STB 2. The communication unit 302 sends and receives, to and from the STB 2, the location information of a job ticket, a request for a job ticket, a job ticket, and the like. Furthermore, the communication unit 302 sends and receives, to and from the broadcast station 4 and the ISP 5, print data and a request for the transmission of print data via the communication network 9. The communication unit 302 further stores, into the storage unit 305, the location information of a job ticket, a job ticket, print data, and the like that have been received. The job ticket separation unit 303 separates, inside the storage unit 305, a job ticket stored in the storage unit 305 into the location information of the print data and print parameters.

When the communication unit 302 receives the location information indicating the storage location of the job ticket, the print processing unit 304 continues print processing in progress if there is any, whereas it makes a request for the transmission of the job ticket via the communication unit 302 based on the location information stored in the storage unit 305, if there is no print processing in progress or when such print processing is completed. Furthermore, the print processing unit 304 makes a request for the transmission of the print data based on the location information of the print data separated from the job ticket. When the communication unit 302 receives the requested print data, the print processing unit 304 rasterizes the print data according to the print parameters separated from the job ticket. More specifically, after spooling the print data (i.e. after making it possible for print processing to be proceeded with, without any delay by using a high-speed auxiliary memory as a buffer), the print processing unit 304 rasterizes the print data according to the print parameters, and outputs the resultant to the printer engine 306. The storage unit 305, which is a memory that is implemented by a random-access memory (RAM), a flash memory, an IC card, or the like, provides storage areas for storing the location information of a job ticket, a job ticket, print data, and the like received by the communication unit 302 as well as providing the job ticket separation unit 303 and the print processing unit 304 with work areas for performing data processing. The printer engine 306 is a control circuit and machine operation unit for printing print data from the print processing unit 304. A print method employed by the printer engine 306 is not limited to a specific method, and various print methods can be employed including thermal transfer printing (dye-sublimation type and hot-melt type), thermal printing, inkjet printing, electrophotographic printing.

Next, a description is given of operations performed in the content print system 100 with the above structure.

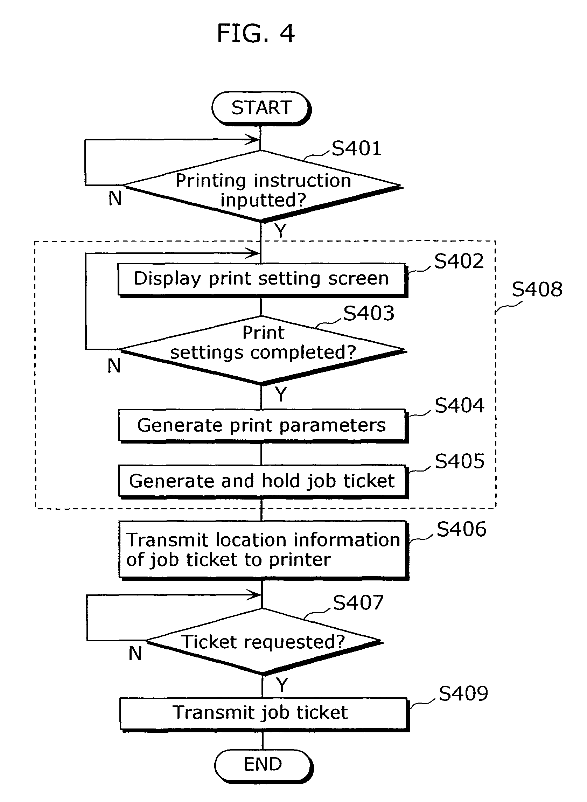

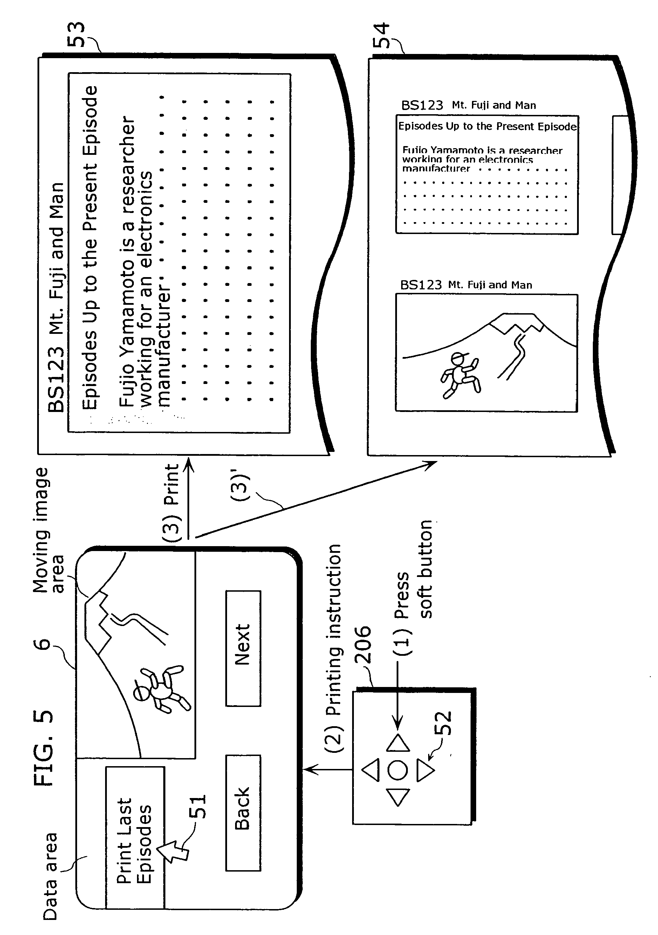

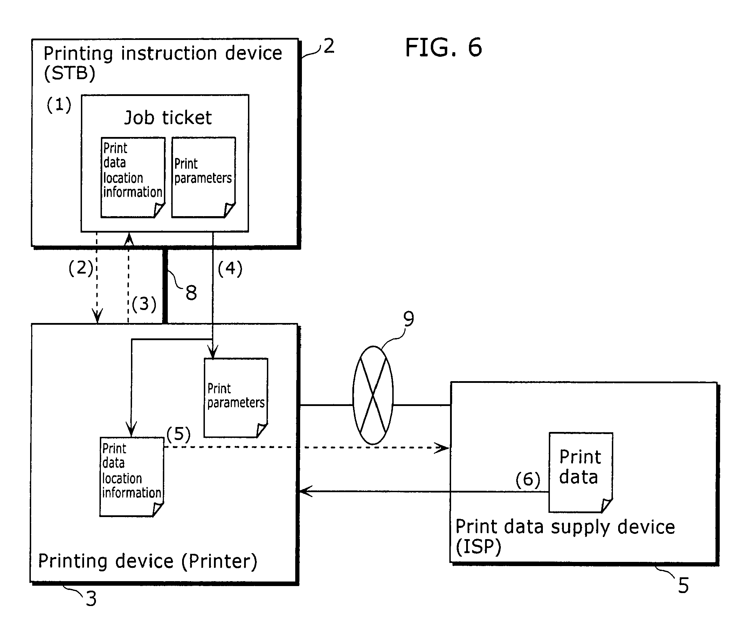

FIG. 4 is a flowchart showing an operation performed by the STB 2 in the content print system 100 according to the present invention. FIG. 5 is a diagram showing a video content that includes print content related thereto as well as a corresponding operation performed by the user to input a printing instruction. FIG. 6 is a diagram showing a flow of data at the time of print processing in the content print system 100 shown in FIG. 1. As shown in FIG. 5, a serialized suspenseful drama titled "Mt. Fuji and Man" is displayed, together with voice, on a moving image area on the screen of the television monitor 6. Displayed on a data area on the same screen is: guidance (not illustrated in the drawing) indicating that the episodes of the drama up to the present episode is available for printout; the "Print Last Episodes" button for executing the printout; and the "Next" button for displaying the next data in the data area and the "Back" button for displaying the previous data in the data area. The user operates the remote control 206, looking at the display screen of the television monitor 6 as shown in FIG. 5, so as to input a printing instruction for printing the print content. For example, the user operates a cursor-movement button of soft buttons 52 to move a cursor 51 on the screen onto the "Print Last Episodes" button. Then, by pressing a decision button (the round-shpaed button in the center) of the soft buttons 52 ((1) in FIG. 5), the user inputs a printing instruction ((2) in FIG. 5).

When the input unit 205 receives an input of a printing instruction from the remote control 206 (S401), the job ticket generation unit 203 obtains, from the content for broadcasting of the drama "Mt. Fuji and Man", the location information indicating the storage location of the print content related to such video content ("the episodes up to the present episode of "Mt. Fuji and Man""). More specifically, in the case where the content for broadcasting includes only the location information of the print content ("the episodes up to the present episode of "Mt. Fuji and Man""), the job ticket generation unit 203 obtains such location information, whereas in the case where the content for broadcasting includes the print data itself of the print content, the job ticket generation unit 203 obtains an address (location information) inside the storage unit 209 at which the print data is stored. Then, the job ticket generation unit 203 causes the display unit 207 to generate display data for the print setting screen 30 as shown in FIG. 3 and causes the television monitor 6 to display the generated display data (S402). In parallel with this, an input related to print settings is accepted while the print setting screen 30 is displayed. Next, when there is an input of an instruction for ending the print settings by the pressing of an "OK" button on the print setting screen 30, for example (S403), the job ticket generation unit 203 generates print parameters for the print content (the episodes up to the present episode of "Mt. Fuji and Man") according to the data inputted in Step S402 (S404). Furthermore, the job ticket generation unit 203 generates a job ticket that is made up of the location information obtained in Step S401 and the print parameters generated in Step S404, and stores the generated job ticket into the storage unit 209 (S405, (1) in FIG. 6). After the job ticket is stored into the storage unit 209, the job management unit 204 generates location information that represents the address of the job ticket as a URI, and sends the generated location information to the printer 3 via the communication unit 202 and the external bus 8 (S406, (2) in FIG. 6). Thereafter, the job management unit 204 periodically checks whether or not the communication unit 202 has received a request for the transmission of a job ticket from the printer 3 (S407). When there is an input of an instruction from the user for changing parameter settings during the period until when a request for the transmission of a job ticket is received, the processing returns to Step 402 so as to accept an input for updating the print settings described by the print parameters of the job ticket (S408). For example, during such period, it is possible for the user to make an input for changing the print settings of the print content ("the episodes up to the present episode of "Mt. Fuji and Man"") from normal page layout to 4 in 1 page layout for printing the print content together with another print content. When the user inputs an instruction for ending the print settings, the job ticket generation unit 203 generates print parameters for the print content ("the episodes up to the present episode of "Mt. Fuji and Man"") according to the input data. Then, the job ticket generation unit 203 rewrites the print parameter included in the job ticket with the generated print parameters so that the address of the job ticket in the storage unit 209 will not be changed.

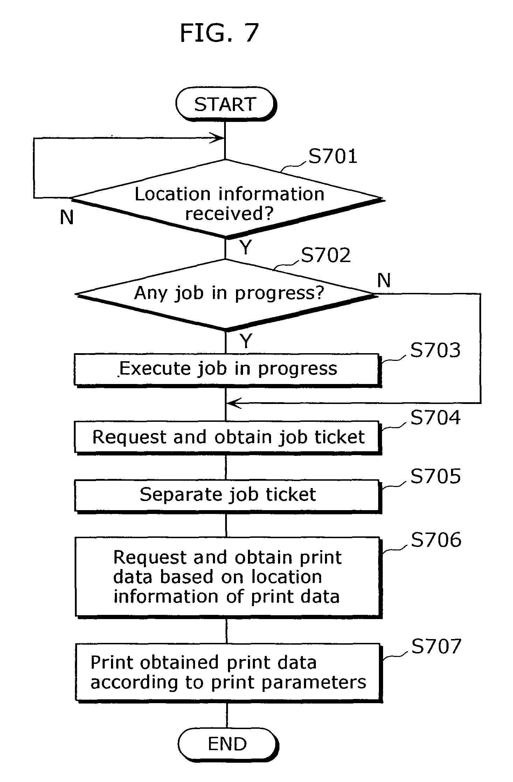

FIG. 7 is a flowchart showing an operation performed by the printer 3 in the content print system 100 according to the present invention. When the communication unit 302 receives the location information of a job ticket from the STB 2 (S701, (2) in FIG. 6), the printer 3 tentatively stores the received location information into the storage unit 305. When the communication unit 202 receives the location information indicating the storage location of the job ticket, and when there is print processing in progress (S702), the print processing unit 304 continues such print processing (S703), whereas when there is no print processing in progress or when such process is completed (S702), the print processing unit 304 makes a request, to the STB 2, for the transmission of the job ticket via the communication unit 302, based on the location information stored in the storage unit 305 (S704, (3) in FIG. 6).

In the STB 2, when receiving the request for the transmission of the job ticket from the printer 3 (S407 in FIG. 4), the job management unit 204 reads the requested job ticket from the storage unit 209, and sends it to the printer 3 (S409 in FIG. 4, (4) in FIG. 6).

In the printer 3, when the communication unit 302 receives the job ticket and it is stored into the storage unit 305, the job ticket separation unit 303 separates the print parameters and the location information of the print data from each other inside the storage unit 305 (S705 in FIG. 7). The print processing unit 304 sends a request to the ISP 5 for the transmission of the print data, via the communication unit 302 and the communication network 9, based on the separated location information (S706, (5) in FIG. 6). When receiving such request for the transmission of the print data, the ISP 5 reads the print data from the print data DB 10, and sends it to the requesting printer 3 ((6) in FIG. 6). In the printer 3, the print data which has been received by the communication unit 302 from the ISP 5 is printed according to the print parameters separated from the job ticket (S707, (3) or (3)' in FIG. 5). The printout 53 shown in FIG. 5 is an example printout in the case where the print content ("the episodes up to the present episode of the "Mt. Fuji and Man"") of the video content ("Mt. Fuji and Man") is printed using normal layout without changing any print settings. Meanwhile, the printout 54 shown in FIG. 5 is an example printout in the case where there is an input of an instruction from the user for updating the page layout of the print settings to 4 in 1 print layout during the period until when a request for the transmission of a job ticket is received.

As described above, according to the content print system 100 of the present invention, since print parameters indicating the print settings for print data are stored in the storage unit 209 of the STB 2 as part of a job ticket, it becomes possible for the STB 2 to change, on its own, the print settings whenever, as long as it is during the period from when the printer 3 pulls a job ticket until when the print job starts, without needing to perform a transaction with the printer 3. Accordingly, the user is not required to perform processing for canceling the print job or to wait for a response from the printer 3 to change the print settings. This makes it possible for the user to change print settings in a simple and speedy manner. What is more, since it is not necessary for the printer 3 to queue, in the storage unit 305, print parameters and print data as jobs in a wait state, it becomes possible to save memory of the storage unit 305.

Note that the description has been given in the above-described embodiment that the currently displayed video content is associated with the print content, but the present invention is not limited to such case and therefore is applicable to another case. For example, the present invention is also applicable to the case of printing print data stored in advance in the storage unit 209. More specifically, in the case where there is an input, from the remote control 206, of a printing instruction that specifies print data stored in the storage unit 209, the job ticket generation unit 203 checks for the storage location of such specified print data so as to obtain its address in the storage unit 209. Next, based on the obtained address, the job ticket generation unit 203 generates location information that should be notified to the printer 3, and generates a job ticket that includes such location information. In this case too, as in the case of the above-described embodiment, it is not necessary to queue print data in the storage unit 305 of the printer 3 as a job in a wait state, and it is therefore possible to save memory of the storage unit 305. Since print settings are performed in the same manner as in the above-described embodiment, it is possible to achieve the same effects, that is, (1) the effect of being able to save memory of the storage unit 305 since it is not necessary to queue print parameters in the storage unit 305 of the printer 3 as jobs in a wait state and (2) the effect of being able to update print settings whenever until the printer 3 makes a request for the transmission of a job ticket, without needing to perform a transaction with the printer 3, since the print parameters are locally stored in the STB 2.

Note that according to the content print system 100 of the present embodiment, screens are displayed for three states during the period from when a printing instruction for printing a content is inputted to when the printing of such content starts. Three statuses are (1) a state in which the STB 2 accepts an instruction for starting printing from the user, (2) a state which is a wait state after a printing instruction is given to the printer 3 and in which it is possible to change print settings, and (3) a state in which the execution of the print job in a wait state has started and in which it is no longer possible to accept any changes of the print settings.

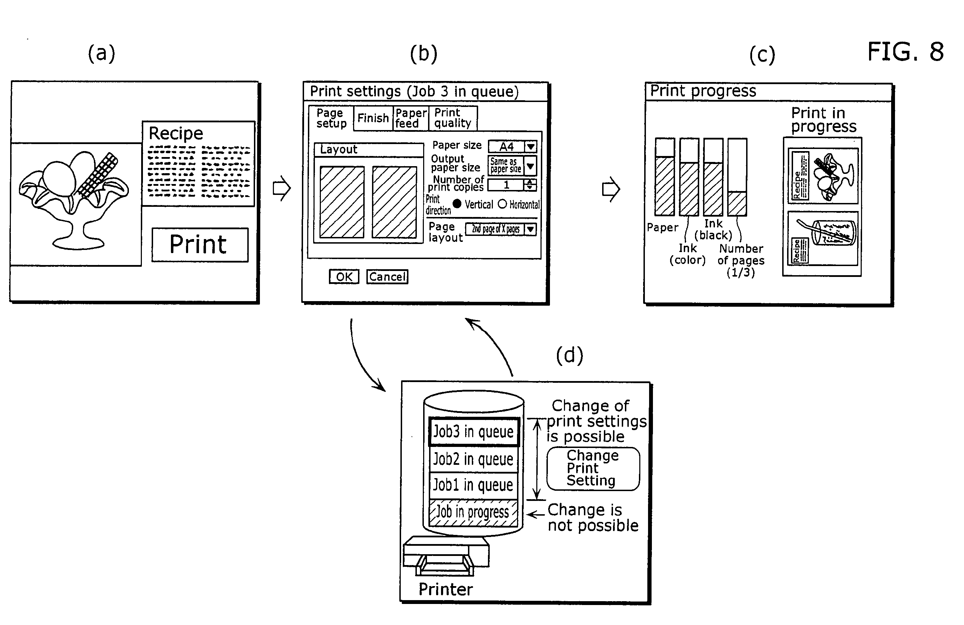

FIG. 8(a), (b), (c), and (d) is a diagram showing an example of how a display screen of the television monitor shifts during the period from when a printing instruction is inputted from a screen showing a content until when the printing of the screen actually starts. FIG. 8(a) shows an example screen of a content on which it is possible to give a printing instruction (e.g. screen showing a parfait recipe (how to make parfait)). The user can give a printing instruction for printing the print content corresponding to the screen being displayed, by pressing the "Print" button displayed on the television monitor, using the remote control or the like.

When a printing instruction is inputted from the screen shown in FIG. 8(a), the display of the television monitor shifts from the screen shown in FIG. 8(a) to the screen shown in FIG. 8(b). FIG. 8(b) shows an example of a print setting screen to be displayed in the case where the "Print" button has been pressed on the screen shown in FIG. 8(a). In other words, FIG. 8(b) is a screen that accepts print settings for the content for which a printing instruction has been given on the screen shown in FIG. 8(a). The top of the screen shown in FIG. 8(b) indicates that the current print job is in a wait state that is identified by an ID "Job 3 in queue". The other elements are the same as those in the print setting screen 30 shown in FIG. 3. When the print settings are completed on the screen shown in FIG. 8(b) and the "OK" button at the bottom of the print setting screen is pressed, the display of the television monitor shifts to the screen shown in FIG. 8(c) or FIG. 8(d).

The screen of FIG. 8(c) shows print jobs that are queued in the printer 3. In the case where the printer 3 is connected to a home network or a local area network (LAN), print jobs to be queued includes print jobs provided from the STB 2 or the DTV 7 currently used by the user as well as print jobs provided from a home appliance or a personal computer, for example. Furthermore, in the case where the printer 3 is directly connected to the DTV 7 or the STB 2 via a bus, print jobs directly provided from a digital camera to the printer 3 can be in the queue. The screen of FIG. 8(c) specifically shows which one of the print jobs in the queue cannot accept a change in the print settings because of the reason that the printing has already been started and which one of them is/are currently in the queue for printing and therefore can accept a change in the print settings. Here, the print job of the parfait recipe for which a printing instruction has been given on the screen shown in FIG. 8(a) is illustrated as "Job 3 in queue" at the top of the queue in a print wait state. Looking at such screen, the user can change the print settings for a selected print job by selecting, by use of a remote control or the like, one of the print jobs indicated as "Change of print settings is possible" and then by pressing the "Print setting change" button. When the "Print setting change" button is pressed on the screen shown in FIG. 8(c), the screen shifts to show the print setting screen as shown in FIG. 8(b) that corresponds to the selected print job. Every time the "Print setting change" button is pressed for a print job in a wait state, the screen shifts to a corresponding print setting screen. Accordingly, it becomes possible for the user to change the print settings for the same print job as many times as desired until such user is satisfied, as long as such print job is in a wait state, and to change the print settings of all print jobs in a wait state.

When there is no print job in a wait state when the "OK" button has been pressed on the screen shown in FIG. 8(b), the printing is started of the content for which a printing instruction has been given on the screen shown in FIG. 8(a), and then the screen shown in FIG. 8(d) is displayed. Meanwhile, when the printing of the print job indicated as "Print in progress" on the screen shown in FIG. 8(c) is completed and the printing is started of the print job "Job 1 in queue" that is in a wait state as a job to be printed next, the screen shown in FIG. 8(d) is displayed on the television monitor. The screen shown in FIG. 8(d) indicates the print progress of a print job, the printing of which has been newly started. More specifically, it displays a print image of the image that starts to be printed, together with the current amount of print papers left, the current amount of remaining color ink, the current amount of remaining black ink, the current number of pages to be printed, and the like. Note that in the case where there still exists a print job in a wait state when the printing of a new print job that was in a wait state is started, the screen of the television monitor shifts to show the screen shown in FIG. 8(c) again, after the screen shown in FIG. 8(d) is displayed for a certain length of time. At this time, the print job that was in a wait state as "Job 1 in queue" on the screen shown in FIG. 8(c) is currently processed as "Job in progress". Accordingly, the number of print jobs in a wait state becomes two, that is, "Job 1 in queue" and "Job 2 in queue". When there is no user operation while such screen shown in FIG. 8(c) is displayed, the printing for "Print in progress" is processed for completion, which is followed by the execution of a print job in a wait state as a new "Job in progress". The job progress is displayed on the screen of FIG. 8(d) for each print job.

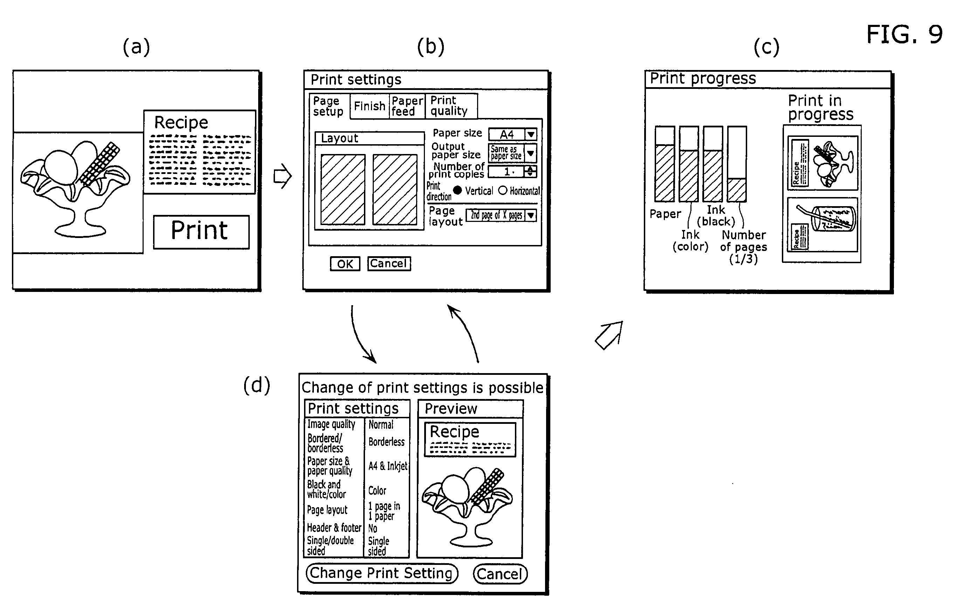

FIG. 9(a), (b), (c), and (d) is a diagram showing another example of how a display screen of the television monitor shifts during the period from when a printing instruction is inputted from a screen showing a content until when the printing of the screen actually starts. FIG. 9 (a), (b), (c), and (d) is different from FIG. 8 (a), (b), (c), and (d) only in that screens shown in FIG. 9(b) and (c) are different. Thus, only such differences are described below. The screen shown in FIG. 9(b) is approximately the same as the print setting screen shown in FIG. 8(b), but the FIG. 9(b) does not particularly show the ID or the like of a job in the queue for printing for which an instruction has been given in FIG. 9(a). When the user makes an input for the print settings from the screen shown in FIG. 9(b), and then presses the "OK" button, the screen shown in FIG. 9(c) is to be displayed.

FIG. 9(c) shows a print preview of the print content for which a printing instruction has been given in FIG. 9(a) as well as showing a screen used by the user to confirm the current print settings. Here, if the print job of the parfait recipe for which a printing instruction has been given in FIG. 9(a) is in a wait state, the top of the screen shown in FIG. 9(c) shows guidance describing "Change of print settings is possible". When the user presses the "Print setting change" button shown in the bottom of the screen in response to such guidance, the display of the television monitor shifts to the print setting screen shown in FIG. 9(b). Accordingly, it becomes possible for the user to change the print settings for the current print job as many times as desired until such user is satisfied, as long as the print job for which a printing instruction has been given from the television monitor is in a wait state.

In the case where the print job is not in a wait state when print settings thereof are made on the print setting screen shown in FIG. 9(b) and then the "OK" button shown in the bottom of the print setting screen is pressed, the preview window shown in FIG. 9(c) shifts to a print start screen shown in FIG. 9(d) after being displayed on the television monitor for a certain length of time. Note that in the case where the print job is not in a wait state and is ready to be printed immediately, when the print settings are completed on the print setting screen shown in FIG. 9(b) and then the "OK" button is pressed, it is possible to display the print start screen shown in FIG. 9(d) without displaying the screen shown in FIG. 9(c).

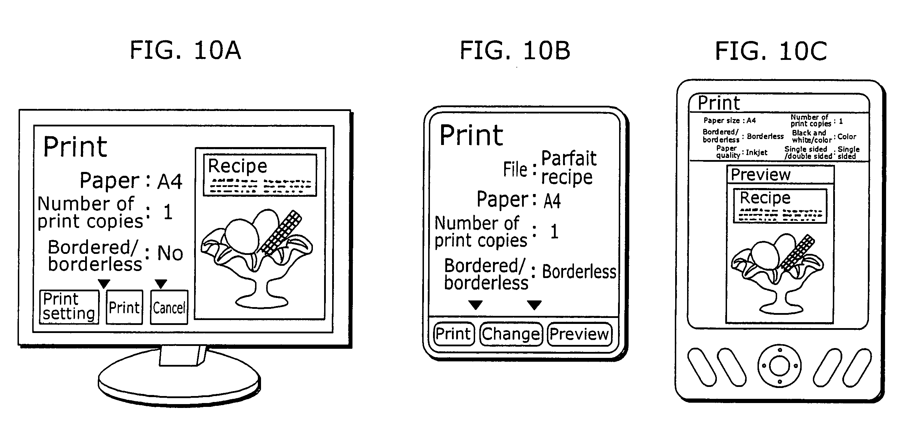

FIGS. 10A, 10B, and 10C are diagrams showing an example of printing instruction input screens in the case where the printing instruction device is a digital television (DTV), a mobile phone, and a personal digital assistant (PDA), respectively. The above-described embodiment describes the case where the printing instruction device according to the present invention is the STB 2 and the DTV 7, but the printing instruction device of the present invention is not limited to them and may be a mobile phone, PDA, or the like, for example. In the case where the printing instruction device is a mobile phone, a PDA, or the like, the effect is produced that the printing instruction device can give a printing instruction to the printing device via a communication network such as the Internet or via infrared communication such as Bluetooth® and Infrared Data Association (IrDA).

To be more specific, in the case where the printing instruction device is an STB or a DTV, a printing instruction screen is displayed on the television monitor. Since the pitch of the display of the television monitor with a size of about 30 inch is big and is not capable of high-resolution display, large-sized buttons and characters are displayed as shown in FIG. 10A. Meanwhile, in the case where the printing instruction device is a mobile phone whose screen is about 2 inch big, it is common that only a limited amount of information can be displayed or inputted at a time. For example, referring to FIG. 10B, since a printing instruction input screen to be displayed on the screen of a mobile phone cannot display a preview and a print setting screen at a time, a preview should be displayed on another screen by operating a "Preview" button. In the case where the printing instruction device is a PDA, although the size of the monitor thereof is about 8 inch, it is capable of high-resolution display. Therefore, as FIG. 10C shows, its printing instruction input screen can show a large amount of information in small characters. As described above, according to the present invention, it is possible to implement a content print system, using various devices as the printing instruction device.

Note that the present invention is not limited to print processing, and if the present invention is applied to moving image reproduction processing and music reproduction processing as well as to content presentation processing such as data download processing, such effects can be achieved as the saving of storage memory at the time of job queuing and the reduction in the number of transactions at the time of updating the settings for processing. A job ticket according to the present embodiment is equivalent to a play list in the case of moving image reproduction processing and music reproduction processing, whereas it is equivalent to a download data list in the case of data download processing. In the present embodiment, parameters that are changeable during the period until the execution of content presentation processing starts are: in the case of moving image reproduction processing, changeable parameters are mainly parameters concerned with motion compensation and still image compensation that are used at the time of converting an interlaced image into a progressive image, and other parameters include parameters related to image quality such as theater mode, dynamic mode, and standard as well as parameters that are used to set the brightness of a screen; in the case of music reproduction processing, changeable parameters are mainly effect-related parameters that are used to set sound surround and special acoustic effects in a special building (e.g. church, concert hall, and live music space); and parameters common to moving image reproduction processing, music reproduction processing, and data download processing are parameters that are used to set the order in which images and piece of music are reproduced as well as the order in which files to be downloaded are downloaded.

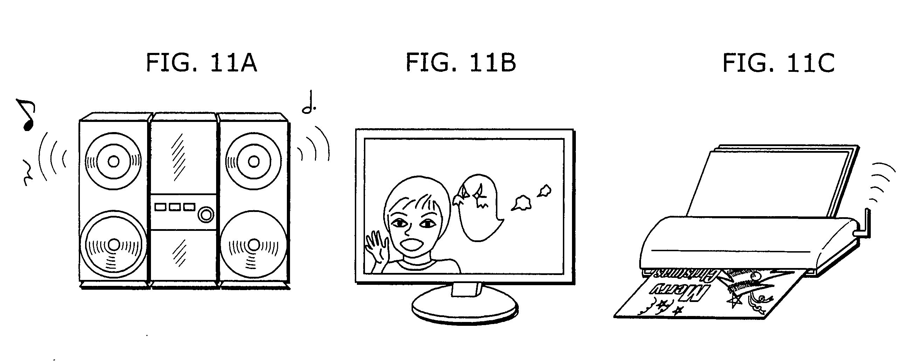

FIGS. 11A, 11B, and 11C are diagrams showing an example of an output to be presented in the case where a presentation device that presents a content is an audio device, a DTV, and a printing device, respectively. FIGS. 10A, 10B, and 10C present specific devices that serve as a printing instruction device in the case where a content is a print content. However, also in the case where a presentation device is intended for presenting an audio content and for presenting a video content, a mobile phone and a PDA, in addition to the STB 2 and the DTV 7, may serve as a presentation instruction device that gives an instruction for presenting a content. FIGS. 11A, 11B, and 11C illustrate an audio component stereo, a DTV, and a printer, respectively, all of which having communication function. As an example of using these devices in combination, the following provides specific descriptions in the case where the user instructs the audio component stereo shown in FIG. 11A to reproduce a music content via the PDA or the like shown in FIG. 10C serving as an audio content presentation instruction device. According to an input from the user for giving a reproduction instruction, the PDA generates a play list, which is a job ticket in music reproduction, that includes a reproduction order parameter indicating the order in which an audio content is reproduced as well as information indicating a storage location of the audio content (e.g. the address of a content distribution server). The PDA sends, to the audio component stereo, information (e.g. an URL) indicating a storage location of the generated play list. The audio component stereo interprets that the URL indicating the storage location of the play list sent from the PDA is an indication of an instruction for reproducing the audio content, and queues the reproduction of such audio content as a queuing job. When this is done, only the URL indicating the storage location of the play list is to be queued. At this stage, when the play list that has been in a wait state as a queuing job becomes ready to be processed immediately, after all the other play lists in a wait state as queuing jobs have been executed, the audio component stereo requests the PDA to send such play list, according to the URL included in the queuing play list. Here, parameters (e.g. parameter indicating the order of reproduction) included in the play list stored inside the PDA can be rewritten as many times as possible until the audio component stereo makes a transmission request. Upon receipt of the requested play list, the audio component stereo reads out information that is included in the received play list and that indicates the storage location of the audio content, and requests a content distribution server, for example, which is the storage location, to transmit the audio content. Next, upon receipt of the requested audio content from the content distribution server, the audio component stereo reproduces the received content. As described above, the presentation device according to the present invention is capable of presenting a content according to a uniform procedure regardless of whether the type of a content is video content, audio content, print content, or whatever. What is more, the presentation instruction device according to the present invention is capable of producing the effect of being able to give, according to a uniform procedure, an instruction for presenting a content, regardless of which one of the above types such content belongs to.

### Industrial Applicability

The printing instruction device according to the present invention is suited for use as a personal computer, a DTV, an STB, a PDA, a mobile phone, and others having communication function.

Furthermore, the presentation device according to the present invention is suited for use as a personal computer, an audio device, a printing device, a DTV, a PDA, an STB, a mobile phone, and others having communication function.

## Claims

1. A printing device that pulls print data to be printed by requesting and obtaining the print data, said device comprising:
a print start instruction receiving unit operable to receive location information indicating a storage location of printing instruction information indicating details of a printing instruction to the printing device, the location information being received as an instruction indicating that printing of the print data should be started;
a printing instruction information request unit operable to request transmission of the printing instruction information indicated by the location information received by said print start instruction receiving unit;
a printing instruction information receiving unit operable to receive the printing instruction information requested by said printing instruction information request unit;
a print data request unit operable to request transmission of the print data, based on the printing instruction information;
a print data receiving unit operable to receive the print data requested by said print data request unit; and
a printing unit operable to print the received print data according to the received printing instruction information.

2. The printing device according to Claim 1,
wherein the printing instruction information includes location information indicating a storage location of the print data, and
said print data request unit is operable to request the transmission of the print data based on the location information included in the printing instruction information.

3. The printing device according to Claim 2,
wherein the printing instruction information includes print type specification information indicating a print type of the print data, and
said printing unit is operable to print the print data based on the print type specification information included in the printing instruction information.

4. The printing device according to Claim 3,
wherein said printing instruction information request unit is operable to request the transmission of the printing instruction information when printing based on the printing instruction information becomes ready for execution.

5. The printing device according to Claim 4,
wherein a device in which the printing instruction information is stored is different from a device in which the print data is stored, and
said printing instruction information request unit is operable to identify the device in which the printing instruction information is stored, based on the location information received by said print start instruction receiving unit, and to request the identified device for the transmission of the printing instruction information.

6. The printing device according to Claim 5,
wherein said print data request unit is operable to identify the device in which the print data is stored based on the location information included in the printing instruction information, and to request the identified device for the transmission of the print data.

7. The printing device according to Claim 6,
wherein said print data request unit is operable to request the transmission of the print data over a communication line.

8. A printing instruction device that gives, to a printing device, a printing instruction to print print data, said device comprising:
a printing instruction input unit operable to accept an instruction, inputted from a user, indicating that the print data should be printed;
a printing instruction information generation unit operable to generate printing instruction information when the instruction indicating that the print data should be printed is accepted, the printing instruction information indicating details of the printing instruction to the printing device;
a printing instruction information storage unit operable to hold the generated printing instruction information;
a location information generation unit operable to generate location information indicating a storage location of the printing instruction information;
a location information transmission unit operable to transmit the generated location information to the printing device;
a transmission request receiving unit operable to receive, from the printing device, a request for transmission of the printing instruction information indicated by the location information; and
a printing instruction information transmission unit operable to transmit the stored printing instruction information to the printing device, in response to the request for transmission.

9. The printing instruction device according to Claim 8,
wherein said printing instruction information generation unit includes
a print data location information obtainment unit operable to obtain location information indicating a storage location of the print data, and
said printing instruction information generation unit is operable to generate the printing instruction information that includes the obtained location information, when the instruction indicating that the print data should be printed is accepted.

10. The printing instruction device according to Claim 9,
wherein said print data location information obtainment unit is operable to receive the location information of the print data from an external device.

11. The printing instruction device according to Claim 10,
wherein said printing instruction input unit includes
a print type specification input unit operable to accept an specification, inputted from the user, indicating a print type of the print data,
said printing instruction information generation unit includes
a print type specification information generation unit operable to generate print type specification information for specifying the print type, when the specification indicating the print type is accepted, and
said printing instruction information generation unit is operable to generate the printing instruction information that includes the generated print type specification information, when the instruction indicating that the print data should be printed is accepted.

12. The printing instruction device according to Claim 11,
wherein said printing instruction input unit further includes
a printing instruction change unit operable to make a change in the already generated printing instruction information that includes the print type specification information, based on an instruction inputted from the user to said printing instruction input unit, and
said printing instruction change unit is operable to make a change in the already generated printing instruction information stored in said printing instruction information storage unit, in the case where the already generated printing instruction information has not yet been transmitted to the printing device.

13. The printing instruction device according to Claim 12,
wherein said printing instruction change unit is operable to make a change in the print type specification information included in the printing instruction information stored in said printing instruction information storage unit.

14. The printing instruction device according to Claim 13,
wherein said printing instruction information transmission unit is operable to transmit the printing instruction information after the change in the print type specification information is completed, in the case of receiving the request for transmission of the printing instruction information before the change in the print type specification information is completed.

15. A print system comprising a printing device and a printing instruction device,
wherein said printing instruction device comprises:
a printing instruction input unit operable to accept an instruction, inputted from a user, indicating that print data should be printed;
a printing instruction information generation unit operable to generate printing instruction information when the instruction indicating that the print data should be printed is accepted, the printing instruction information indicating details of a printing instruction to said printing device;
a printing instruction information storage unit operable to hold the generated printing instruction information;
a location information generation unit operable to generate location information indicating a storage location of the printing instruction information;
a location information transmission unit operable to transmit the generated location information to said printing device;
a transmission request receiving unit operable to receive, from said printing device, a request for transmission of the printing instruction information indicated by the location information; and
a printing instruction information transmission unit operable to transmit the stored printing instruction information to said printing device, in response to the request for transmission, and
said printing device comprises:
a print start instruction receiving unit operable to receive the location information indicating the storage location of the printing instruction information, the location information being received as an instruction indicating that printing of the print data should be started;
a printing instruction information request unit operable to request transmission of the printing instruction information indicated by the location information received by said print start instruction receiving unit;
a printing instruction information receiving unit operable to receive the printing instruction information requested by said printing instruction information request unit;
a print data request unit operable to request transmission of the print data, based on the printing instruction information;
a print data receiving unit operable to receive the print data requested by said print data request unit; and
a printing unit operable to print the received print data according to the received printing instruction information.

16. A presentation device that pulls presentation data to be presented by requesting and obtaining the presentation data, said device comprising:
a presentation instruction receiving unit operable to receive location information indicating a storage location of presentation instruction information indicating details of a presentation instruction to the presentation device, the location information being received as an instruction indicating that presentation of the presentation data should be started;
a presentation instruction information request unit operable to request transmission of the presentation instruction information indicated by the location information received by said presentation instruction receiving unit;
a presentation instruction information receiving unit operable to receive the presentation instruction information requested by said presentation instruction information request unit;
a presentation data request unit operable to request transmission of the presentation data, based on the presentation instruction information;
a presentation data receiving unit operable to receive the presentation data requested by said presentation data request unit; and
a presentation unit operable to present the received presentation data according to the received presentation instruction information.

17. The presentation device according to Claim 16,
wherein the presentation device is a music reproduction device that pulls music data to be reproduced by requesting and obtaining the music data,
the presentation instruction receiving unit is operable to receive location information indicating a storage location of a play list indicating details of a reproduction instruction to the music reproduction device, the location information being received as an instruction indicating that reproduction of the music data should be started,
said presentation instruction information request unit is operable to request transmission of the play list indicated by the location information received by said presentation instruction receiving unit,
said presentation instruction information receiving unit is operable to receive the play list requested by said presentation instruction information request unit,
said presentation data request unit is operable to request transmission of the music data, based on the play list,
said presentation data receiving unit is operable to receive the music data requested by said presentation data request unit, and
said presentation unit is operable to reproduce the received music data according to the received play list.

18. The presentation device according to Claim 16,
wherein the presentation device is a display device that pulls display data to be displayed by requesting and obtaining the display data,
the presentation instruction receiving unit is operable to receive location information indicating a storage location of a display list indicating details of a display instruction to the display device, the location information being received as an instruction indicating that display of the display data should be started,
said presentation instruction information request unit is operable to request transmission of the display list indicated by the location information received by said presentation instruction receiving unit,
said presentation instruction information receiving unit is operable to receive the display list requested by said presentation instruction information request unit,
said presentation data request unit is operable to request transmission of the display data, based on the display list,
said presentation data receiving unit is operable to receive the display data requested by said presentation data request unit, and
said presentation unit is operable to display the received display data according to the received display list.

19. The presentation device according to Claim 16,
wherein the presentation device is a printing device that pulls print data to be printed by requesting and obtaining the print data,
the presentation instruction receiving unit is operable to receive location information indicating a storage location of printing instruction information indicating details of a printing instruction to the printing device, the location information being received as a instruction indicating that printing of the print data should be started,
said presentation instruction information request unit is operable to request transmission of the printing instruction information indicated by the location information received by said presentation instruction receiving unit,
said presentation instruction information receiving unit is operable to receive the printing instruction information requested by said presentation instruction information request unit,
said presentation data request unit is operable to request transmission of the print data, based on the printing instruction information,
said presentation data receiving unit is operable to receive the print data requested by said presentation data request unit, and
said presentation unit is operable to print the received print data according to the received printing instruction information.

20. A printing method for use with a printing device that pulls print data to be printed by requesting and obtaining the print data, said method comprising:
receiving location information indicating a storage location of printing instruction information indicating details of a printing instruction to the printing device, the location information being received as a print start instruction indicating that printing of the print data should be started;
requesting transmission of the printing instruction information indicated by the location information received in said receiving of the print start instruction;
receiving the printing instruction information requested in said requesting for the transmission of the printing instruction information;
requesting transmission of the print data based on the printing instruction information;
receiving the print data requested in said requesting for the transmission of the print data; and
printing the received print data according to the received printing instruction information.

21. A printing instruction method for giving, to a printing device, a printing instruction to print print data, said method comprising:
accepting an instruction inputted from a user indicating that the print data should be printed;
generating printing instruction information when the instruction indicating that the print data should be printed is accepted, the printing instruction information indicating details of the printing instruction to the printing device;
holding the generated printing instruction information;
generating location information indicating a storage location of the printing instruction information;
transmitting the generated location information to the printing device;
receiving, from the printing device, a request for transmission of the printing instruction information indicated by the location information; and
transmitting the stored printing instruction information to the printing device, in response to the request for transmission.

22. A print method for use in a print system comprising a printing device and a printing instruction device, said method comprising:
accepting an instruction from a user indicating that print data should be printed, said accepting being executed in the printing instruction device;
generating printing instruction information indicating details of a printing instruction to the printing device, when the instruction indicating that the print data should be printed is accepted, said generating being executed in the printing instruction device;
holding the generated printing instruction information, said holding being executed in the printing instruction device;
generating location information indicating a storage location of the printing instruction information, said generating being executed in the printing instruction device;
transmitting the generated location information to the printing device, said transmitting being executed in the printing instruction device;
receiving the location information indicating the storage location of printing instruction information, the location information being received as a print start instruction indicating that printing of the print data should be started, said receiving being executed in the printing device;
sending a request for transmission of the printing instruction information indicated by the location information received in said receiving of the print start instruction, said sending being executed in the printing device;
receiving, from the printing device, the request for transmission of the printing instruction information indicated by the location information, said receiving being executed in the printing instruction device;
transmitting the stored printing instruction information to the printing device, in response to the request for transmission, said transmitting being executed in the printing instruction device;
receiving the printing instruction information requested in said requesting for the transmission of the printing instruction information, said receiving being executed in the printing device;
requesting transmission of the print data based on the printing instruction information, said requesting being executed in the printing device;
receiving the print data requested in said requesting for the transmission of the print data, said receiving being executed in the printing device; and
printing the received print data according to the received printing instruction information, said printing being executed in the printing device.

23. A program for a printing device that pulls print data to be printed by requesting and obtaining the print data, said program causing a computer to execute:
receiving location information indicating a storage location of printing instruction information indicating details of a printing instruction to the printing device, the location information being received as a print start instruction indicating that printing of the print data should be started;
requesting transmission of the printing instruction information indicated by the location information received in said receiving of the print start instruction;
receiving the printing instruction information requested in said requesting for the transmission of the printing instruction information;
requesting transmission of the print data based on the printing instruction information;
receiving the print data requested in said requesting for the transmission of the print data; and
printing the received print data according to the received printing instruction information.

24. A program for a printing instruction device that gives, to a printing device, a printing instruction to print print data, said program causing a computer to execute:
accepting an instruction inputted from a user indicating that the print data should be printed;
generating printing instruction information when the instruction indicating that the print data should be printed is accepted, the printing instruction information indicating details of the printing instruction to the printing device;
holding the generated printing instruction information;
generating location information indicating a storage location of the printing instruction information;
transmitting the generated location information to the printing device;
receiving, from the printing device, a request for transmission of the printing instruction information indicated by the location information; and
transmitting the stored printing instruction information to the printing device, in response to the request for transmission.
